# EUROPEAN PATENT SPECIFICATION

(11) **EP 2 911 443 B1**
(45) Date of publication and mention of the grant of the patent: **06.03.2019**
(21) Application number: 13846373.2
(22) Date of filing: 11.09.2013
(51) Int. Cl.: H04W 28/02

(54) **METHOD AND DEVICE FOR CONTROLLING DATA TRANSMISSION VIA SIGNALING BY USER EQUIPMENT**
VERFAHREN UND VORRICHTUNG ZUR STEUERUNG DER DATENÜBERTRAGUNG MITTELS SIGNALISIERUNG DURCH EINE BENUTZERVORRICHTUNG
PROCÉDÉ ET DISPOSITIF POUR LA COMMANDE DE TRANSMISSION DE DONNÉES PAR SIGNALISATION PAR ÉQUIPEMENT UTILISATEUR

(30) Priority: 16.10.2012 CN 201210392557
(43) Date of publication of application: 26.08.2015
(73) Proprietor: ZTE Corporation, Shenzhen, Guangdong 518057 (CN)
(72) Inventor: DAI, Qian, Shenzhen Guangdong 518057 (CN); CUI, Yunpeng, Shenzhen Guangdong 518057 (CN)
(74) Representative: Brunazzi, Stefano
(86) International application number: PCT/CN2013/083314
(87) International publication number: WO 2014/059840

(56) References cited:
- EP-A1- 2 830 248
- WO-A1-2012/028076
- CN-A- 101 043 233
- CN-A- 101 931 898
- US-A1- 2005 237 935
- CHINA MOBILE: "Network controlled small data transfer", 3GPP DRAFT; S2-113270_NETWORK CONTROLLED SMALL DATA TRANSFER-R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 5 July 2011 (2011-07-05), XP050548564, [retrieved on 2011-07-05]
- VODAFONE ET AL: "Transfer and update of solution of small data transfer in NAS signalling", 3GPP DRAFT; S2-123414 REV 3112 SMALL DATA BY NAS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Barcelona, Spain; 20120709 - 20120713 13 July 2012 (2012-07-13), XP050683120, Retrieved from the Internet: URL:http://www.3gpp.org/ftp/tsg_sa/WG2_Arc h/TSGS2_92_Barcelona/Docs/ [retrieved on 2012-07-13]
- CATT: "Access Time Period Update for Time Controlled MTC Feature", 3GPP DRAFT; S2-110717, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), XP050523900, [retrieved on 2011-02-15]

## Description

### Technical Field

The present invention relates to the field of communications, including e.g., a method and device for controlling data transmission via a signaling by a User Equipment (UE).

### Background

In the existing radio communication applications, small data packet transmission occupies a great proportion. Meanwhile, for many hotspot applications at present, for example, instant messenger software MSN and QQ, and a smart meter in the Internet of Things, etc., the actual frequency of data transmission is not high, with the interval of data transmission of these services generally ranging from more than ten seconds to tens minutes.

When transmitting data, an existing radio communication system requires a UE, an access network equipment and a core network equipment to establish data bearing links and to transmit uplink data and downlink data via the established data bearing links. When there is no subsequent newly-arrived data needs to be transmitted within a period of time after completing transmitting the data to be transmitted, the access network equipment will release the data bearing links of the user equipment so as to release the network resources occupied by the user equipment. Taking a Long Term Evolution (LTE) system or a Universal Mobile Telecommunications System (UMTS) as an example, when establishing/releasing data bearing, a UE or an access network equipment (the access network equipment of the LTE system is an eNodeB, and the access network equipment of the UMTS system is a Radio Resource Control (RNC)) need to execute connection establishing/releasing process of an RRC layer and establish a Non-Access-Stratum (NAS) signaling connection between the UE and a core network equipment.

As previously described, at present, the frequency of data transmission in many services is not high, if the establishing/releasing process of the data bearing link between the UE and network side is executed for each single time of data transmission, the control signaling overhead caused thereby is great, that is, the overhead ratio of data or signaling is very low and the system is less efficient.

In order to solve the above-mentioned problem, at present, the 3Gpp International Conference introduces the solution of using the existing control signaling to transmit small data packets, for example, it is proposed in the 3Gpp technical report 23.888 that data packets is bear in an NAS Protocol Data Unit (PDU) in an existing signaling, RRC Connection Setup Complete, in the RRC connection establishment process, and in this way, the subsequent process of establishing the NAS signaling connection between the UE and the core network equipment is omitted so as to reduce part of the signaling overhead.

However, such a method of bearing data packets via a signaling (i.e. transmitting data via a signaling) can reduce part of the signaling overhead, but the method is only applicable to the occasions wherein the data transmission frequencies are low, and as to the occasions where the data transmission frequencies are high, the method will still result in the problem of a large signaling overhead and low system efficiency. Furthermore, when there are multiple transmission mechanisms simultaneously in a system (i.e. the above-mentioned mechanism of transmitting data via a signaling and the mechanism of transmitting data via a data bearing link in the existing standard), the user lacks a reasonable selecting mechanism to control the user to select appropriate transmission mechanisms in appropriate occasions, and if the user is allowed to select by himself or herself, error data transmission manners may be easily selected as a result, thereby resulting in a low system efficient.

Aiming at the above-mentioned problem, no effective solution has been presented.

The European Patent Application EP 2 568 758 A1 relates to a method and device for processing data transmission by a machine-type communication device.

The 3GPP technical document 3GPP S2-113270 relates to the mechanism for network controlled small data transfer via SMS,
The 3GPP technical document 3GPP S2-123414 relates to a solution of small data transfer in NAS signaling.

The 3GPP technical document "Access Time Period Update for Time Controlled MTC Feature" (S2-110717) discloses a communication window to perform MTC data exchange.

### Summary

A method and device for controlling data transmission via a signaling by a user equipment are provided in the present invention, so at least to solve the technical problem of low system efficiency in the related art due to the mechanism of transmitting data selected by the user himself or herself.

The object of the present invention is achieved by the features of the appended independent claims.

According to one aspect of the present invention, a method for controlling data transmission via a signaling by a User Equipment (UE) is provided, the method comprises: the UE receives a control parameter, wherein the control parameter is used for controlling a frequency of the data transmission via the signaling by the UE; and the UE controls, according to the control parameter, the frequency of data transmission via the signaling by the UE.

According to an embodiment of the present invention, the control parameter carries indication information for indicating one or more limit strategies, and/or preset parameters corresponding to one or more limit strategies.

According to an embodiment of the present invention, the limit strategies comprise at least one of: when the number of data packets received or the number of data packets sent by the UE within a first preset length of time is smaller than a first preset threshold, the UE is allowed to transmit data via a signaling, otherwise, the UE is prohibited from transmitting data via the signaling; when the sum of the number of data packets received and sent by the UE within a second preset length of time is smaller than a second preset threshold, the UE is allowed to transmit data via the signaling, otherwise, the UE is prohibited from transmitting data via the signaling; when the number of times of data transmission via the signaling by the UE within a third preset length of time is smaller than a third preset threshold, the UE is allowed to transmit data via the signaling, otherwise, the UE is prohibited from transmitting data via the signaling; when a time interval between two consecutive data transmission adopting a signaling data transmission mechanism by the UE is greater than or equal to a fourth preset length of time, the UE is allowed to transmit data via the signaling, otherwise, the UE is prohibited from transmitting data via the signaling; or a preset proportion of UEs are allowed to adopt a signaling data transmission mechanism.

According to an embodiment of the present invention, in a case that the UE and a network side agree on the limit strategies in advance, the control parameter carries the preset parameters corresponding to the limit strategies agreed on.

According to an embodiment of the present invention, the control parameter further carries: first indication information for indicating whether the UE is allowed to transmit data via the signaling, and/or, second indication information for indicating a service type and/or equipment type of the data transmission via the signaling.

According to an embodiment of the present invention, the control parameter is configured by an access network equipment and/or a core network equipment at a network side.

According to an embodiment of the present invention, the control parameter is carried in a system message and/or a Radio Resource Control (RRC) signaling.

According to another aspect of the invention, another method for controlling data transmission via a signaling by a User Equipment (UE) is provided, the method comprises: a network side equipment determines a control parameter according to a current network state, wherein the control parameter is used for controlling a frequency of data transmission via the signaling by the UE; and the network side equipment transmits the determined control parameter to the UE.

According to an embodiment of the present invention, the control parameter carries indication information for indicating one or more limit strategies, and/or preset parameters corresponding to one or more limit strategies.

According to an embodiment of the present invention, the limit strategies comprise at least one of: when the number of data packets received or the number of data packets sent by the UE within a first preset length of time is smaller than a first preset threshold, the UE is allowed to transmit data via the signaling, otherwise, the UE is prohibited from transmitting data via the signaling; when the sum of the number of data packets received and sent by the UE within a second preset length of time is smaller than a second preset threshold, the UE is allowed to transmit data via the signaling, otherwise, the UE is prohibited from transmitting data via the signaling; when the number of times of data transmission via the signaling by the UE within a third preset length of time is smaller than a third preset threshold, the UE is allowed to transmit data via the signaling, otherwise, the UE is prohibited from transmitting data via the signaling; when a time interval between two consecutive data transmission adopting a signaling data transmission mechanism by the UE is greater than or equal to a fourth preset length of time, the UE is allowed to transmit data via the signaling, otherwise, the UE is prohibited from transmitting data via the signaling; or a preset proportion of UEs are allowed to adopt a signaling data transmission mechanism.

According to an embodiment of the present invention, in a case that the UE and the network side equipment agree on the limit strategies in advance, the network side equipment carries in the control parameter the preset parameters corresponding to the limit strategies agreed on.

According to an embodiment of the present invention, the control parameter further carries: first indication information for indicating whether the UE is allowed to transmit data via the signaling, and/or, second indication information for indicating a service type and/or equipment type of the data transmission via the signaling.

According to an embodiment of the present invention, the network side equipment comprises an access network equipment at a network side and/or a core network equipment at a network side.

According to an embodiment of the present invention, when the network side equipment is the access network equipment, determining, by the network side equipment, the control parameter according to the current network state comprises: the access network equipment determines the control parameter according to at least one of: a network signaling load, a radio resource load and a frequency of data transmission by the UE.

According to an embodiment of the present invention, when the network side equipment is the access network equipment, transmitting, by the network side equipment, the determined control parameter to the UE comprises: the access network equipment sends the determined control parameter via a system message to all UEs in a cell managed by the network side equipment; and/or the access network equipment sends the determined control parameter via a Radio Resource Control (RRC) signaling to UEs receiving the RRC signaling.

According to an embodiment of the present invention, when the network side equipment is the core network equipment, transmitting, by the network side equipment, the determined control parameter to the UE comprises: the core network equipment determines the control parameter according to a current signaling load of a core network.

According to an embodiment of the present invention, when the network side equipment is the core network equipment, transmitting, by the network side equipment, the determined control parameter to the UE comprises: the core network sends the determined control parameter to a target access network equipment, and the control parameter is sent by the target access network equipment to all UEs managed by the target access network equipment.

According to an embodiment of the present invention, when the network side equipment is the core network equipment, transmitting, by the network side equipment, the determined control parameter to the UE comprises: a core network sends the determined control parameter to a target access network equipment; the target access network equipment determines a new control parameter according to the received control parameter sent by the core network equipment and its own resource load; the target access network equipment sends the new control parameter to all UEs managed by the target access network equipment.

According to another aspect of the present invention, a device for controlling data transmission via a signaling by a User Equipment (UE) is provided, located in the UE, comprising: a receiving element, configured to receive a control parameter, wherein the control parameter is used for controlling a frequency of data transmission via the signaling by the UE; and a controlling element, configured to control, according to the control parameter, the frequency of data transmission via the signaling by the UE.

According to another aspect of the present invention, a device for controlling data transmission via a signaling by a User Equipment (UE) is provided, located in an access network equipment, comprising: a first determining element, configured to determine a control parameter according to a current network state, wherein the control parameter is used for controlling a frequency of data transmission via the signaling by the UE; a first transmitting element, configured to transmit the determined control parameter to the UE.

According to an embodiment of the present invention, the first determining element comprises: a first determining sub-element, configured to determine the control parameter according to at least one of: a network signaling load, a radio resource load and a frequency of data transmission by the UE.

According to an embodiment of the present invention, the first transmitting element comprises: a first transmitting sub-element, configured to send the determined control parameter via a system message to all UEs in a cell managed by the network side equipment; and/or a second transmitting sub-element, configured to send the determined control parameter via a Radio Resource Control (RRC) signaling to UEs receiving the RRC signaling.

According to another aspect of the present invention, a device for controlling data transmission via a signaling by a User Equipment (UE) is provided, located in a core network equipment, comprising: a second determining element, configured to determine a control parameter according to a current network state, wherein the control parameter is used for controlling a frequency of data transmission via the signaling by the UE; a second transmitting element, configured to transmit the determined control parameter to the UE.

According to an embodiment of the present invention, the second determining element comprises: a second determining sub-element, configured to determine the control parameter according to a current signaling load of a core network.

According to an embodiment of the present invention, the second transmitting element comprises: a third transmitting sub-element, configured to send the determined control parameter to a target access network equipment, the control parameter being sent by the target access network equipment to all UEs managed by the target access network equipment; and/or a fourth transmitting sub-element, configured to send the determined control parameter to a target access network equipment, a new control parameter being determined by the target access network equipment according to the received control parameter sent by the core network equipment and its own resource load and the new control parameter being sent by the target access network equipment to all UEs managed by the target access network equipment.

In the present invention, the network side will send to the UE a control parameter which is used for controlling the frequency of data transmission via the signaling by the UE, so that the user equipment can control, according to the received control parameter, the frequency of data transmission via the signaling by itself, for example, when in the control parameter, the user equipment is only allowed to transmit data via the signaling at most five times within one minute, the user equipment will transmit data according to the rule, and when the limit is exceeded, the UE can prohibit adopting the manner of transmitting data via the signaling so as to effectively solve the technical problem of low system efficiency in the related art due to the mechanism of transmitting data selected by the user himself or herself, thus improving system efficiency.

### Brief Description of the Drawings

Drawings, provided for further understanding of the present invention and forming a part of the specification, are used to explain the present invention together with embodiments of the present invention rather than to limit the present invention. In the drawings:
Fig. 1 is a preferred flow chart of the method for controlling data transmission via a signaling by a user equipment according to the embodiment of the present invention;
Fig. 2 is another preferred flow chart of the method for controlling data transmission via a signaling by a user equipment according to the embodiment of the present invention;
Fig. 3 is a preferred structure block diagram of the device for controlling data transmission via a signaling by a user equipment according to the embodiment of the present invention;
Fig. 4 is another preferred structure block diagram of the device for controlling data transmission via a signaling by a user equipment according to the embodiment of the present invention;
Fig. 5 is another preferred structure block diagram of the device for controlling data transmission via a signaling by a user equipment according to the embodiment of the present invention;
Fig. 6 is yet another preferred structure block diagram of the device for controlling data transmission via a signaling by a user equipment according to the embodiment of the present invention;
Fig. 7 is another preferred flow chart of the method for controlling data transmission via a signaling by a user equipment according to the embodiment of the present invention;
Fig. 8 is a structural schematic diagram of an embodiment of an access network equipment initiating a usage limit of the signaling data transmission mechanism on the UE according to the embodiment of the present invention;
Fig. 9 is a structural schematic diagram of an embodiment of a core network equipment initiating a usage limit of the signaling data transmission mechanism on the UE according to the embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

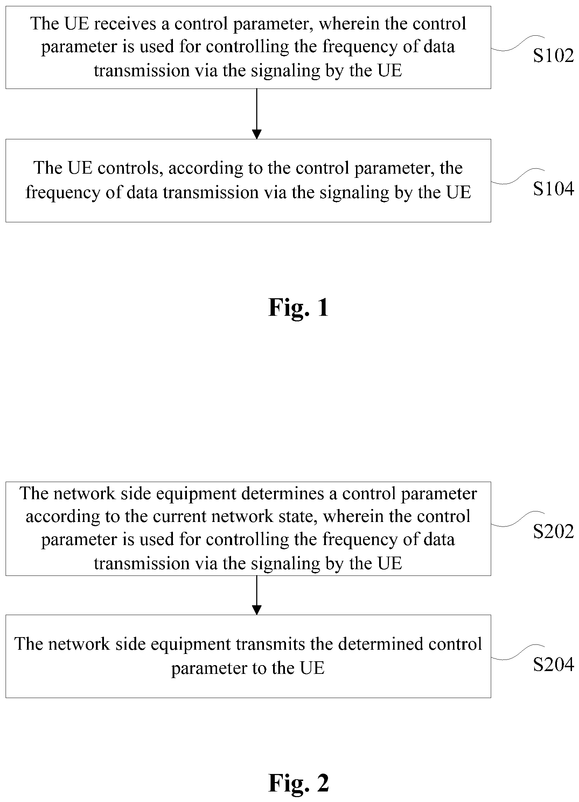

A preferred method for controlling data transmission via a signaling by a User Equipment (UE) is provided in the embodiment of the present invention, and as shown in Fig. 1, the method comprises the following steps:
Step S102: The UE receives a control parameter, wherein the control parameter is used for controlling the frequency of data transmission via the signaling by the UE;
Step S104: The UE controls, according to the control parameter, the frequency of data transmission via the signaling by the UE.

In the above-mentioned preferred embodiment, the network side will send to the user equipment a control parameter which is used for controlling the frequency of data transmission via the signaling by the UE, so that the user equipment can control, according to the received control parameter, the frequency of data transmission via the signaling by itself, for example, when in the control parameter, the user equipment is only allowed to transmit data via the signaling at most five times within one minute, the user equipment will transmit data according to the rule, and if the limit is exceeded, the user equipment can prohibit adopting the manner of transmitting data via the signaling so as to effectively solve the technical problem of low system efficiency in the prior art due to the mechanism of transmitting data selected by the user himself or herself, thus improving system efficiency.

In a preferred embodiment, multiple limit strategies may be preset. For example, there are provided several preferred limit strategies in the embodiment of the present invention:
1) when the number of data packets received or the number of data packets sent by the UE within a first preset length of time is smaller than a first preset threshold, the UE is allowed to transmit data via the signaling, otherwise, the UE is prohibited from transmitting data via the signaling;
2) when the sum of the number of data packets received and sent by the UE within a second preset length of time is smaller than a second preset threshold, the UE is allowed to transmit data via the signaling, otherwise, the UE is prohibited from transmitting data via the signaling;
3) when the number of times of data transmission via a signaling by the UE within a third preset length of time is smaller than a third preset threshold, the UE is allowed to transmit data via the signaling, otherwise, the UE is prohibited from transmitting data via the signaling;
4) when a time interval between two consecutive data transmission adopting a signaling data transmission mechanism by the UE is greater than or equal to a fourth preset length of time, the UE is allowed to transmit data via the signaling, otherwise, the UE is prohibited from transmitting data via the signaling; or
5) a preset proportion of UEs are allowed to adopt a signaling data transmission mechanism.

Accordingly, the network side can carry in the control parameter the indication information for indicating which kind of limit strategy to be adopt, and can carry in the control parameter the value of a parameter corresponding to the strategy as well, for example, when it is indicated that a limit strategy 1 is adopted, the first preset length of time and the threshold value of the first preset threshold are carried in the control message accordingly. Preferably, the network side can agree one or more limit strategies together with the user equipment, and thus only the value of the parameter needs to be carried in the control message, without requiring to carry the indication information for indicating limit strategy manners. In a preferred embodiment, the control parameter carries indication information for indicating one or more limit strategies, and/or preset parameters corresponding to one or more limit strategies. Or, in a case that the UE and the network side agree on the limit strategies in advance, the control parameter carries one or more preset parameters without carrying the indication information for indicating one or more limit strategies.

Considering that the situation that the load of the current network side is very heavy may appears in the actual applications, at which time the indication information which directly indicates whether the user is allowed to transmit data via the signaling can be directly carried in the control message, and the indication information which indicates which types of user equipment or which types of services are allowed to transmit data via the signaling can also be carried in the control message; and after receiving the control message, the user equipment can determines whether itself is allowed to transmit data via the signaling according to the indication information. In one preferred embodiment, the control parameter further carries: first indication information for indicating whether the UE is allowed to transmit data via the signaling, and/or, second indication information for indicating a service type and/or equipment type transmitting data via the signaling.

The control parameter can be configured by a network side equipment, for example, can be configured by an access network equipment and/or a core network equipment at the network side. Preferably, the control parameter can be carried in a system message and/or an RRC signaling.

In order to give better description of the network side configuring network parameters, a preferred method for controlling data transmission via the signaling by the user equipment is provided in the embodiment of the present invention, and the description is given on the basis of the network side equipment, as shown in Fig. 2, the method comprises the following steps:
Step S202: The network side equipment determines a control parameter according to a current network state, wherein the control parameter is used for controlling the frequency of data transmission via the signaling by the UE;
Step S204: The network side equipment transmits the determined control parameter to the UE.

In the above-mentioned preferred embodiment, the network side equipment generates the control parameter according to the current network state, so as to control, in this way, the frequency of the data transmission via the signaling by the user equipment, thus avoiding the problem of a too great signaling load at the network side.

In a preferred embodiment, the control parameter carries indication information for indicating one or more limit strategies, and/or preset parameters corresponding to one or more limit strategies. With regard to the limit strategies which are similar to the limit strategies as referred hereinabove, the details are not described here again.

When the network side equipment generates the control parameter, when the UE and the network side equipment agree on the limit strategies in advance, the network side equipment only carries in the control parameter the preset parameters corresponding to the limit strategies agreed on, without needing to carry the indication information for indicating the limit strategies. By this way, the complexity of the control parameter can be decreased.

The above-mentioned network side equipment comprises but is not limited to an access network equipment at the network side and/or a core network equipment at the network side.

With regard to the access network equipment and the core network equipment, different processing manners can be adopted, and the processing manners by which the two equipment generates the control parameter will be respectively described in detail below.

When the network side equipment is the access network equipment, the access network equipment can determine the control parameter according to the current network signaling load, radio resource load and the frequency of data transmission by the UE.

Accordingly, the access network equipment can transmit the control parameter via a system message, and can also transmit the control parameter via a RRC signaling, for example, the access network equipment sends the determined control parameter via the system message to all UEs in a cell managed by the network side equipment; and/or the access network equipment sends the determined control parameter via the RRC signaling to UEs receiving the RRC signaling.

When the network side equipment is the core network equipment, the core network equipment determines the control parameter according to the current signaling load of the core network.

Accordingly, the core network equipment can send the determined control parameter to the access network equipment, and the access network equipment directly sends the control parameter to the corresponding UE; or the access network equipment further adjusts the control parameter to be sent to the user equipment by itself according to the control parameter determined by the core network equipment, so that the determined control parameter better complies with the current load condition of the system.

In one preferred embodiment, when the network side equipment is the core network equipment, the network side equipment transmitting the determined control parameter to the UE comprises:
the core network sends the determined control parameter to a target access network equipment, and the control parameter is sent by the target access network equipment to all UEs managed by the target access network equipment; or, the core network sends the determined control parameter to the target access network equipment; the target access network equipment determines a new control parameter according to the received control parameter sent by the core network equipment and its own resource load; and the target access network equipment sends the new control parameter to all UEs managed by the target access network equipment.

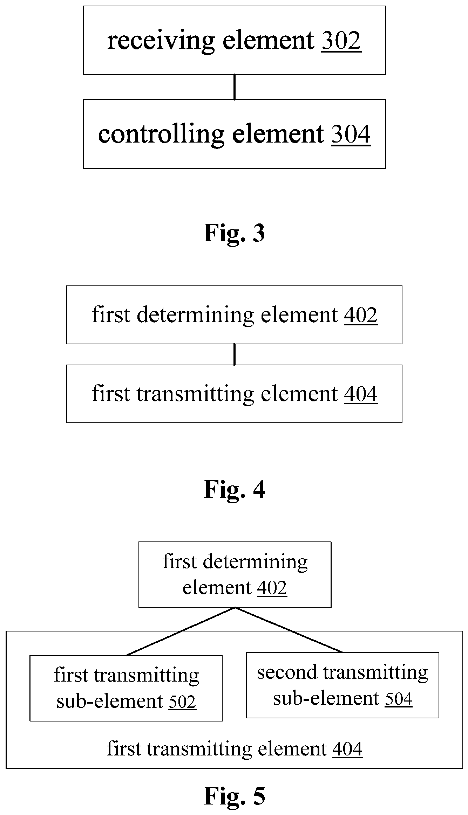

In the present embodiment, a device for controlling data transmission via a signaling by a UE is also provided, having described that the equipment is used for realising the above-mentioned embodiment and preferred embodiment, no further description is repeated. As used herein after, the terms "element" or "component" can be the combinations of software and/or hardware realising pre-determined functions. The device described in the following embodiments are preferably realised using software, but the realisation using hardware, or the combination of software and hardware is also possible and contemplated
Fig. 3 is a preferred structure block diagram of the device for controlling data transmission via a signaling by a user equipment according to the embodiment of the present invention, wherein the device is located in the user equipment and, as shown in Fig. 3, the device comprises: a receiving element **302** and a controlling element **304.** The structure is described below.

The receiving element **302** is configured to receive a control parameter, wherein the control parameter is used for controlling the frequency of data transmission via the signaling by the UE; and
the controlling element **304** is coupled with the receiving element **302** and is configured to control, according to the control parameter, the frequency of data transmission via the signaling by the UE.

Fig. 4 is a preferred structure block diagram of the device for controlling data transmission via a signaling by a user equipment according to the embodiment of the present invention, wherein the device is located in the access network equipment and, as shown in Fig. 4, the device comprises: a first determining element **402** and a first transmitting element **404.** The structure is described below.

The first determining element **402** is configured to determine a control parameter according to the current network state, wherein the control parameter is used for controlling the frequency of data transmission via the signaling by the UE;
the first transmitting element **404** is coupled with the first determining element **402** and is configured to transmit the determined control parameter to the UE.

In a preferred embodiment, the first determining element **402** comprises: a first determining sub-element which is configured to determine the control parameter according to at least one of: a network signaling load, a radio resource load and the frequency of data transmission by the UE.

As shown in Fig. 5, the first transmitting element **404** comprises: a first transmitting sub-element **502** which is configured to send the determined control parameter via a system message to all UEs in a cell managed by the network side equipment; and/or a second transmitting sub-element **504** which is configured to send the determined control parameter via an RRC signaling to UEs receiving the RRC signaling.

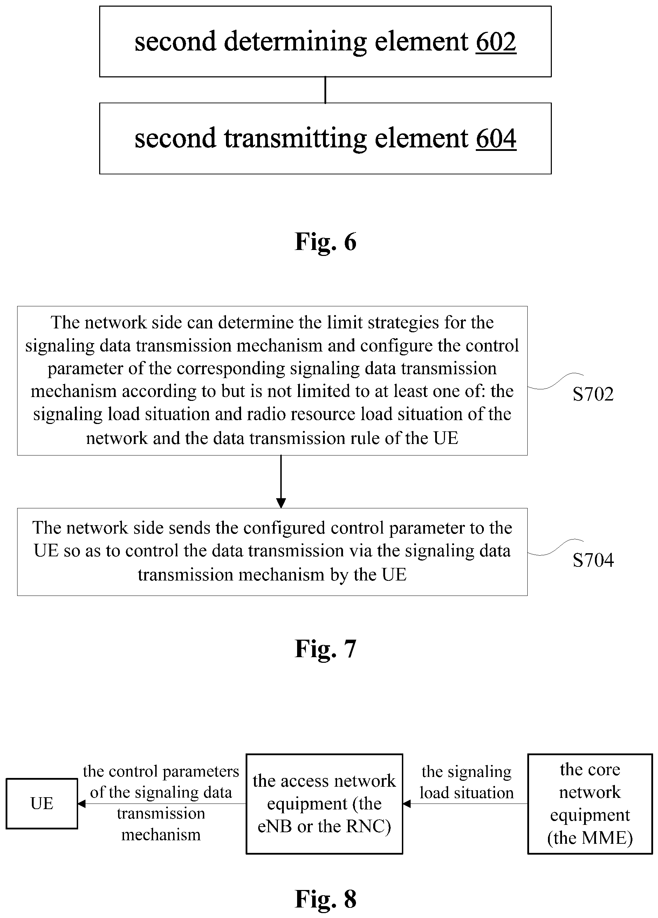

Fig. 6 is a preferred structure block diagram of the device for controlling data transmission via a signaling by a user equipment according to the embodiment of the present invention, wherein the device is located in the core network equipment and, as shown in Fig. 6, the device comprises: a second determining element **602** and a second transmitting element **604.** The structure is described below.

The second determining element **602** is configured to determine a control parameter according to a current network state, wherein the control parameter is used for controlling the frequency of data transmission via the signaling by the UE;
the second transmitting element **604** is coupled with the first determining element **602** and is configured to transmit the determined control parameter to the UE.

In a preferred embodiment, the second determining element 602 comprises: a second determining sub-element which is configured to determine the control parameter according to a current signaling load of the core network.

In a preferred embodiment, the second transmitting element 604 comprises: a third transmitting sub-element which is configured to send the determined control parameter to a target access network equipment, the control parameter being sent by the target access network equipment to all UEs managed by the target access network equipment; and/or a fourth transmitting sub-element which is configured to send the determined control parameter to a target access network equipment, a new control parameter being determined by the target access network equipment according to the received control parameter sent by the core network equipment and its own resource load and the new control parameter being sent by the target access network equipment to all UEs managed by the target access network equipment.

A preferred embodiment is provided in the present invention to further interpret the present invention, but it is noted that the preferred embodiment only intends to better describe the present invention, rather than to improperly limit the present invention.

A method for controlling a signaling data transmission mechanism is further provided in the embodiment of the present invention, i.e. the method for controlling data transmission via a signaling by a user equipment, and as shown in Fig. 7, the method comprises the following steps:
Step S702: The network side can determine the limit strategies for the signaling data transmission mechanism and configure the control parameter of the corresponding signaling data transmission mechanism according to but is not limited to at least one of: the signaling load situation and radio resource load situation of the network and the data transmission rule of the UE, and the like.

Preferably, the network side can control the UE according to the signaling load situation and radio resource load situation of the network and the data transmission rule of the UE by the following way: the greater the signaling load and radio resource load of the network is, and the more frequently the UE sends data, the greater the limit that the network side sets to the UE using the mechanism of transmitting data via the signaling is.

Step S704: The network side sends the configured control parameter to the UE so as to control the data transmission via the signaling data transmission mechanism by the UE, wherein the limit strategies include but are not limited to at least on of:
1) when the number of data packets arrived or the number of data packets received or the total number of data packets arrived or received within a first preset length of time by the UE is smaller than a second preset threshold, the UE is allowed to use the mechanism of transmitting data via the signaling; otherwise, the UE is not allowed to use the above-mentioned mechanism of transmitting data via the signaling; it is noted that the transmission via the signaling will be referred to hereinafter using the mechanism of transmitting data via the signaling, i.e. be described as a mechanism, which essentially is data transmission via the signaling;
2) when the number of times of the UE using the mechanism of transmitting data via the signaling within a third preset length of time is smaller than a fourth preset threshold, the UE is allowed to continue to transmit data using the mechanism of transmitting data via the signaling; otherwise, the UE is prohibited from using the mechanism of transmitting data via the signaling;
3) the time interval between the UE using the mechanism of transmitting data via the signaling twice can not be smaller than a fifth preset length of time;
4) a proportion of the users are allowed or not allowed to use the signaling data transmission mechanism, for example, only 30 percent of the users are allowed for the usage;
5) the network side directly sends to the UE an identifier of "being allowed/not allowed to use the mechanism of transmitting data via the signaling" so as to indicate, via the identifier, whether the UE may be allowed to use the mechanism of transmitting data via the signaling;
6) the network side sends to the UE a service type indication or an equipment type indication of whether the UE is allowed or not allowed to use the mechanism of transmitting data via the signaling, wherein the indication is used for notifying the UE of which service types or equipment types can or can not use the mechanism of transmitting data via the signaling, so that according to the received indication, the UE can determine whether itself matches with the types set in the indication and determine whether itself can use the mechanism of transmitting data via the signaling.

In the above-mentioned various preferred embodiments, the network side can send the control parameter of the signaling data transmission mechanism via the system message or the RRC signaling; and the network side can also agree on the control parameter of the signaling data transmission mechanism with the UE in advance.

The above-mentioned control parameter comprises: the indication information for indicating which type of limit strategy for the mechanism of transmitting data via the signaling the UE adopts; and/or the preset parameters corresponding to the limit strategy.

Preferably, the above-mentioned control parameters can also only comprise the preset parameters corresponding to the limit strategy for the mechanism of transmitting data via the signaling, wherein the corresponding limit strategy adopted by the UE is agreed on by the network side and the UE in advance.

The above-mentioned preset parameters can comprise at least one of: the first preset length of time and the threshold value of the second preset threshold, or the third preset length of time and the threshold value of the fourth preset threshold, or the fifth preset length of time.

A method for controlling the signaling data transmission mechanism is further provided in the preferred embodiment, which refers to the core network equipment and comprises the following steps:
Step S1: the core network equipment determines, according to the signaling load situation of itself, whether to set the usage limit of the signaling data transmission mechanism to the UE;
Step S2: if necessary, the core network equipment send to the access network equipment the identifier of the limit strategy for the signaling data transmission mechanism and/or the parameters corresponding to the limit strategy;
Step S3: the access network equipment adjusts the limit strategy for the signaling data transmission mechanism according to the limit identifier and/or limit parameters.

The above-mentioned limit identifier comprises: the indication identifier of whether the signaling data transmission mechanism is allowed or not allowed to be used;
the above-mentioned limit parameters for the signaling data transmission mechanism comprise but are not limited to at least one of:
1) the service type indication or the user equipment type indication of whether the signaling data transmission mechanism is allowed or not allowed to be used, wherein the above-mentioned indication is used for indicating which service types or user equipment types can be allowed to use the mechanism of transmitting data via the signaling, or which service types or user equipment types can not use the mechanism of transmitting data via the signaling;
2) the first preset length of time and the second preset threshold, which are used for indicating that when the number of data packets arrived or the number of data packets received or the total number of data packets arrived or received within the first preset length of time by the UE is smaller than the second preset threshold, the UE is allowed to use the above-mentioned mechanism of transmitting data via the signaling; otherwise, the UE is not allowed to use the above-mentioned mechanism of transmitting data via the signaling;
3) the third preset length of time and the fourth preset threshold, which are used for indicating that when the number of times of the UE using the above-mentioned mechanism of transmitting data via the signaling within the third preset length of time is smaller than the fourth preset threshold, the UE is allowed to continue to use the above-mentioned mechanism of transmitting data via the signaling; otherwise, the UE is prohibited from using the above-mentioned mechanism of transmitting data via the signaling;
4) the fifth preset length of time, which is used for indicating that the time interval between the UE using the mechanism of transmitting data via the signaling twice can not be smaller than a fifth preset length of time;
5) the proportion of the user, which is used for indicating the proportion of the users that are allowed or not allowed to use the signaling data transmission mechanism.

The above-mentioned manners of the present invention can be applicable to various types of broadband radio communication systems which introduce the mechanism of transmitting data via the signaling, and an LTE system is explained below as an example. However, it is noted that taking the LTE system as an example only intends to better describe the present invention, rather than to improperly limit the present invention.

It is assumed that the scenario of the embodiment is an LTE system, the access network element of the network side is an eNodeB (referred to as an eNB, or a base station), and the core network element of the network side is a Mobile Management Entity (MME).

The eNB monitors the signaling load situation of the network via the interface with the MME, for example, the load situation of the MME can be monitored via an OVERLOAD START information element.

The eNB is itself provided the capability of monitoring the radio resource load situation and can monitor the rule of the UE transmitting data, for example, the eNB can count the rule of the time interval of the UE sending data packets and the size of data packets.

The eNB determines, according to the above-mentioned monitoring and counting result, whether it is required to set limit for the UE using the signaling data transmission mechanism, and to what extent the limit is set.

The eNB can set thresholds for the signaling load and the radio resource load, and can also set thresholds respectively for the frequencies of the UE receiving or sending data. The two cases are respectively described below.
1) The eNB can respectively set thresholds for the signaling load and radio resource load, and when the loads arrive at or exceed the thresholds, the eNB sets limit of using the signaling data transmission mechanism to the UE; preferably, the value of the thresholds may depend on the operation strategies of different operators and the processing capacity of the network equipment. For example, if the processing capacity of the network equipment is high, that is, when the load arrives at a high level, the network equipment can still tolerate that the UE freely use the signaling data transmission mechanism, a great threshold value can be set.
2) The eNB can set the threshold for the frequency of the UE receiving or sending data, and when the frequency of the UE receiving or sending data arrives at or exceeds the threshold, if the UE still adopts the signaling data transmission mechanism to receive and send data, the network resource efficiency will be decreased, and thus at this moment the eNB can set limit of using the signaling data transmission mechanism to the UE.

Preferably, after the eNB determines that it is necessary to set limit of using the signaling data transmission mechanism to the UE, the optional limit strategies comprise but are not limited to one of the following manners:
Manner 1, when the number of data packets arrived or the number of data packets received or the total number of data packets arrived or received within a first preset length of time by the UE is smaller than a second preset threshold, the UE is allowed to use the above-mentioned mechanism of transmitting data via the signaling; otherwise, the UE is not allowed to use the mechanism of transmitting data via the signaling.
   However, the manner defines that only when the frequency of the UE receiving or sending data packets is lower than a certain threshold value, the UE can use the mechanism of transmitting data via the signaling, so as to ensure that the utilization efficiency of the network resources and that the signaling load of the core network is not susceptible to too large stress.
   The UE can set a timer and a counter respectively corresponding to the first preset length of time and the second preset threshold to count, according to the rules of the above-mentioned manner 1, the data packets which satisfy the requirement of the signaling data transmission mechanism, and judge whether the value of the counter arrives at or exceeds the second preset threshold before the timer arrives at or exceeds the first preset length of time, so as to determine whether itself can be allowed to use the signaling data transmission mechanism to transmit subsequent data packets.
   Preferably, another manner can also be adopted to realise the effect of manner 1, when the frequency of data packets arrived or data packets received or data packets arrived and received of the UE is less than a preset sixth frequency threshold, the UE is allowed to use the above-mentioned mechanism of transmitting data via the signaling; otherwise, the UE is not allowed to use the above-mentioned mechanism of transmitting data via the signaling; and this manner only requires one control parameter and can thus effectively reduce the control signaling overhead. For example, the network side and the UE can agree on the unit for expressing the frequency in advance, e.g., data packet number/per 50 seconds, or data packet number/per hundred seconds. Accordingly, the UE acquires data packets corresponding to the unit of the frequency from the control parameter, so as to count the frequency of the data packets.
   In order to reduce unnecessary data packet counting which causes resource waste, the UE can only count data packets which satisfy the requirement of the signaling data transmission mechanism and can be transmitted via the signaling data transmission mechanism; whereas as regards data packets which can not be transmitted using the signaling data transmission mechanism, the UE will not conduct counting thereon.
Manner 2, when the number of times of the UE using the mechanism of transmitting data via the signaling within the third preset length of time is smaller than the fourth preset threshold, the UE is allowed to continue to use the above-mentioned mechanism of transmitting data via the signaling; otherwise, the UE is prohibited from using the above-mentioned mechanism of transmitting data via the signaling;
   The strategy of the method is similar to that of manner 1, and the control index thereof is the number of times that the UE has used the signaling data transmission mechanism; and by defining the frequency of the UE using the signaling data transmission mechanism, the utilization efficiency of the network resources can be effectively ensured, and the signaling load of the core network is ensured not susceptible to too large stress.
   The UE side can set a timer and a counter corresponding to the third preset length of time and the fourth preset threshold to count, according to the rules of manner 2, the number of times of using the signaling data transmission mechanism so as to judge whether the value of the counter arrives at or exceeds the fourth preset threshold before the timer arrives at or exceeds the third preset length of time, so as to determine whether itself can be allowed to use the signaling data transmission mechanism to transmit subsequent data packets.
   Preferably, another manner can also be adopted to realise the effect of manner 2, when the frequency of the UE using the mechanism of transmitting data via the signaling is less than a preset seventh frequency threshold, the UE is allowed to use the mechanism of transmitting data via the signaling; otherwise, the UE is not allowed to use the mechanism of transmitting data via the signaling; and this manner only requires one control parameter, and thus can effectively reduce the control signaling overhead. For example, the network side and the UE can agree on the unit for expressing the frequency in advance, e.g., usage times/per 50 seconds, or usage times/per hundred seconds. Accordingly, the UE count the frequency of using the signaling data transmission mechanism according to the unit agreed on.
Manner 3, the time interval between the UE using the mechanism of transmitting data via the signaling twice can not be less than a fifth preset length of time; the manner sets more strict limit to the frequency of the UE using the signaling data transmission mechanism, which not only limits the total utility frequency thereof, but also limit that the UE can not consecutively use the signaling data transmission mechanism too rapid.
   For example, the UE sets a timer, and set the length of time of the timer as the fifth preset length of time; and the UE can, without limitation, select one from the following trigger events to initiate the timer:
   1) when the data has arrived and the UE is ready to transmit data via the signaling data transmission mechanism;
   2) when the UE starts to transmit data via the signaling data transmission mechanism;
   3) when the UE completes transmitting data via the signaling data transmission mechanism;
   4) before the timer expiries, the UE can not be allowed to use the signaling data transmission mechanism to transmit data.
Manner 4, a proportion of the users are allowed/not allowed to use the signaling data transmission mechanism, wherein the manner focuses on limiting the proportion of the users that can or can not be allowed to use the signaling data transmission mechanism.

For example, the eNB can set the proportion of the users that can be allowed to use the signaling data transmission mechanism as 30 percent, thus when the users in a non-RRC connection state want to send data, a random number which is uniformly distributed between 0 and 1 can be generated via a random number generator, and when the random number is less than 0.3, the user can be allowed to use the signaling data transmission mechanism to send data; otherwise, the user can not be allowed to use the signaling data transmission mechanism to send the current data to be transmitted, but can only establish a user plane bearer to send the current data to be transmitted.

The eNB can select one of the above-mentioned four manners to limit the frequency of the UE using the signaling data transmission mechanism.

Preferably, the eNB can support the above-mentioned four manners simultaneously, and explicitly indicate, in the control parameter sent to the UE, which control manner is selected by the eNB.

The eNB can also agree on one of the four manners with the UE in advance, for example, one of the manners is included in the standard protocol, so that the manner is fixedly selected to control the UE to use the above-mentioned signaling data transmission mechanism.

After the eNB selects the control manner, when the eNB determines to set limit of the signaling data transmission mechanism to the UE, the eNB can adopt one of the following four manners to configure the control parameter for the UE:
the eNB sends the control parameter for the signaling data transmission mechanism via a system message, wherein the control parameter is valid for all the UEs in the cell; for example, a new IE can be added in the existing system message block (e.g., a SystemInformationBlock2 can be selected, and of course, other system information blocks can also be selected) to bear the control parameter for the signaling data transmission mechanism, and the control parameter of the above-mentioned manner 1 is adopted as an example.

### Example one:

```
     SystemInformationBlockType2 ::= SEQUENCE {
      ac-BarringInfo SEQUENCE {
           ac-BarringForEmergency BOOLEAN,
           ac-BarringForMO-Signaling AC-BarringConfig OPTIONAL, -- Need OP
           ac-BarringForMO-Data AC-BarringConfig OPTIONAL -- Need OP
      } OPTIONAL,
      -- Need OP
      radioResourceConfigCommon RadioResourceConfigCommonSIB,
      ue-TimersAndConstants UE-TimersAndConstants,
      freqlnfo SEQUENCE {
           ul-CarrierFreq ARFCN-ValueEUTRA OPTIONAL, -- Need OP
           ul-Bandwidth ENUMERATED {n6, nl5, n25, n50, n75, n100}
                                                                     OPTIONAL,
      -- Need OP
           additionalSpectrumEmission AdditionalSpectrumEmission
      },
      mbsfn-SubframeConfigList MBSFN-SubframeConfigList OPTIONAL, --
 Need OR
      timeAlignmentTimerCommon TimeAlignmentTimer,
      ...,
      lateNonCriticalExtension OCTET STRING OPTIONAL, -- Need OP
      [[ ssac-BarringForMMTEL-Voice-r9 AC-BarringConfig OPTIONAL, -- Need OP
           ssac-BarringForMMTEL-Video-r9 AC-BarringConfig OPTIONAL -- Need OP
      ]],
      [[ac-BarringForCSFB-r10 AC-BarringConfig OPTIONAL - Need OP
      ]]
    ue-ConveyDataViaSignalingControl UE-ConveyDataViaSignalingControl-IE OPTIONAL--
 Need OP
    }
    UE-ConveyDataViaSignalingControl-IE ::= SEQUENCE {
      TimerLengthThreshold-1 ENUMERATED {s00, s10, s20, s40, s60, s80},
      PacketNumThreshold-2 ENUMERATED {nl, n5, n10, n20,n40},
    }
```

### Example two:

```
    UE-ConveyDataViaSignalingControl-IE ::= SEQUENCE {
      FrequencyThreshold-1 ENUMERATED {fl, f10, f20, f40},
 }
```

The above shows two examples of adding the control parameter of manner 1 in the SIB2 pseudo-code of the existing LTE protocol:
The first example corresponds to the first expression method of manner 1, that is, an IE is newly added in SIB2: ue-ConveyDataViaSignalingControl; and the first preset length of time and the second preset threshold are born by the newly-added IE. The above-mentioned s00, s10, and s20 can respectively represent 0 second, 10 seconds and 20 seconds, and so on; n1, n5 and n10 respectively represent one, five and ten, and so on.

The second example corresponds to the second expression method of manner 1, that is, an IE, ue-ConveyDataViaSignalingControl, is newly added in the SIB2; and the sixth frequency threshold is born by the newly-added IE, wherein f1, f10 and f20 respectively represent 1 data packet per 100 seconds, 10 data packets per 100 seconds and 20 data packets per 100 seconds, and so on.

Preferably, in addition to adding an IE in the existing SIB, a new SIB can also be defined, for example, a SIB16 is defined to specifically used for bearing the control parameter.

The transferring of the parameter correspond to manner 1 is explained above as an example, the sending of the control parameter by manner 2, manner 3 and manner 4, etc., are similar to that of manner 1, and the details are not described here again.

When the eNB sends, via an RRC signaling, the above-mentioned control parameter of the signaling data transmission mechanism, the control parameter will be valid for the UEs receiving the RRC signalling.

For example, the control parameter of the signaling data transmission mechanism can be born by newly adding an IE in the existing RRC signaling, or the control parameter of the signaling data transmission mechanism can be born by a newly defined RRC signaling.

For instance, the control parameter can be transmitted by newly adding an IE in the existing RRC signaling, for example, the control parameter of the UE auxiliary information can be born by newly adding an IE in an RRCConnectionSetup, SecurityModeCommand, RRCConnectionReconfiguration, RRCConnectionReestablishment, RRCConnectionReestablishmentReject, RRCConnectionReject, RRCConnectionRelease, UECapabilityEnquiry, and UEInformationRequest; specifically, the design manner of the IE may refer to the above pseudo-code example of the SIB2.

The network side and the UE agree on the control parameter of the signaling data transmission mechanism in advance, for example, the control parameter is included in the standard protocol, and all the UEs following the protocol need to adopt the control parameter in the standard protocol to limit its own behaviours of using the signaling data transmission mechanism.

In addition to the above-mentioned four limit strategies for the UE using the signaling data transmission mechanism, the following manners may also be further adopted:
Manner 5, the network side sends to the UE an identifier of "being allowed/not allowed to use the mechanism of transmitting data via a signaling" so as to indicate whether the UE may be allowed to use the mechanism of transmitting data via the signaling;
manner 6, it is mainly referred to the processing strategy in the case that the network side equipment monitors some extreme situations, so as to implement the strict method for controlling the UE. For example, when the access network equipment detects that the radio resource load is very heavy, or the core network equipment detects that the signaling load is very heavy, or when the access network equipment detects that the data of the UE arrivals very frequently or the number of times of using the signaling data transmission mechanism is very frequent, the network side can send to the UE the identifier of "being not allowed to use the mechanism of transmitting data via a signaling", so that the UE is prohibited from using the mechanism of transmitting data via the signaling so as to rapidly alleviate the network resource stress.

The network side can further judge, by setting a threshold, whether the above-mentioned situations arrive at the extent where the UE needs to be prohibited from using the mechanism of transmitting data via the signaling, wherein the threshold can be set by the operator itself according to its own network load capability.

When the network side detects that the above-mentioned situations are improving, for example, when the above-mentioned situations are detected to be lower than the above-mentioned threshold, the network side can send to the UE the identifier of "being allowed to use the mechanism of transmitting data via a signaling".

The network side and the UE can support manner 5 and manner 1, or manner 2, or manner 3, or manner 4 simultaneously. For example, manner 5 and manner 1 are supported simultaneously, or manner 5 and manner 2 are supported simultaneously.

With regard to the sending of the above-mentioned identifier, one of the following manners can be adopted:
1) the eNB sends the identifier via the system message, and the identifier sent in this way is valid for all the UEs in the cell;
2) the eNB sends the identifier via the RRC signaling, and the identifier sent in this way is valid only for the UEs which receive the RRC signaling.

The particular embodiment of adding an identifier in a system message or an RRC signaling can refer to the above-mentioned description of manner 1.

Manner 6, the network side sends to the UE a service type indication or an equipment type indication indicating whether the UE is allowed or not allowed to use the mechanism of transmitting data via the signaling, wherein the indication is used for notifying the UE of which service types or equipment types can be allowed to use the mechanism of transmitting data via the signaling, and which service types or equipment types can not be allowed to use the mechanism of transmitting data via the signaling; and according to the received indication, the UE can determine whether itself matches with the above-mentioned types in the indication and determine whether itself can be allowed to use the mechanism of transmitting data via the signaling.

Different service types, or different user equipment types are of different data transmission laws, for example:
1) the voice services of the smart phone are of the features of small data packets, periodicity and short sending intervals;
2) the instant messaging type services of the smart phone are of the features of small data packets, non-periodicity and random sending intervals; and
3) the smart meters are of the features of small data packets, periodicity and long sending intervals.

Therefore, some service or equipment types are not suitable to be allowed to use the mechanism of transmitting data via the signaling, whereas some are very suitable to be allowed to use the mechanism of transmitting data via the signaling; in order to avoid the service or equipment types which are not suitable to be allowed to use the mechanism of transmitting data via the signaling using the mechanism of transmitting data via the signaling, which causes a low system efficiency, the above-mentioned manner 6 can be used to effectively avoid the problem.

There are many kinds of distinctions of the service types, for example:
1) classification is performed according to whether the service type is a Guaranteed Bit Rate service (GBR);
2) classification is performed according to whether the service type is a small data service;
3) classification is performed according to the frequently of data sending;
4) classification is performed according to whether the data packets satisfy the requirements of the signaling data transmission mechanism, i.e. according to whether the data packets can be sent via the signaling data transmission mechanism;
5) classification is performed according to the software types, for example, voice, instant messaging, background service, File Transfer Protocol (FTP), Hypertext Transfer Protocol (Http), Stream, Push or Pull services.

There are also many kinds of distinctions of the user equipment types, for example:
1) classification is performed according to whether the user equipment is a Human to Human (H2H) messaging equipment;
2) classification is performed according to whether the user equipment is a small data equipment (referring to the equipment of which data sent is all small data);
3) classification is performed according to whether the user equipment is a Machine to Machine (M2M) messaging equipment;
4) classification is performed according to more detailed equipment types, for example: mobile phones, smart meters (electricity meters, water meters, etc.), tracing type equipment, security type equipment, monitoring type equipment, alarming type equipment, etc.

The network side and the UE agree in advance on which kind of classification manner to adopt, the network side determines, according to its own radio resource load or signaling load, to set limit of using the signaling data transmission mechanism to which types of service or types of equipment, and sends the corresponding indication information to the UE.

The sending manner of the indication information may be the eNB sending via the system message, and in this case, the indication information is valid for all the UEs in the cell; and the eNB may also send via the RRC signaling, and the indication information in this manner is valid for the UEs receiving the RRC signaling.

The particular embodiments of adding the indication information for indicating the service or equipment types in the system message or the RRC signaling can adopt the manners in the above-mentioned manner 1, and the details are not described here again.

For example, the network side and the UE agree on performing classification according to whether the service is a small data service, the network side sends the 2-bit indication information to the UE: the first bit represents that the service is a small data service and the second bit represents that the service is a non-small data service; and the bits being 1 represents "being allowed to use the signaling data transmission mechanism", whereas the bits being 0 represents "being not allowed to use the signaling data transmission mechanism".

After receiving the indication information, the UE judges whether the service itself is performing is a small data service, and when the performing service is a small data service, the UE judges, according to the bit value corresponding to the small data service, whether the UE can be allowed to use the signaling data transmission mechanism to send the data of the service.

The network side and the UE can use manner 6 and other manners cooperatively;
for example, manner 1, manner 5 and manner 6 can be supported simultaneously;
or manner 2, manner 5 and manner 6 can be supported simultaneously;
and manner 6 and manner 1, or manner 2, or manner 3, or manner 4 can also be used cooperatively.

For example, manner 6 and manner 1 are used cooperatively, and the like, and will not be limited by the present invention.

It is assumed that the network side and the UE agree on "performing classification according to whether the equipment is a small data equipment", the network side sends the 2-bit indication information to the UE: the first bit represents that the equipment is a small data equipment and the second bit represents that the equipment is a non-small data equipment; and the bits being 1 represents "being allowed to use the signaling data transmission mechanism", whereas the bits being 0 represents "being not allowed to use the signaling data transmission mechanism".

The following IE is introduced in the SIB2:

```
    UE-ConveyDataViaSignalingControl-IE ::= SEQUENCE
      { SmallDataDeviceEnable BitString(2),
      TimerLengthThreshold-1 ENUMERATED {s00, s10, s20, s40,s60, s80},
      PacketNumThreshold-2 ENUMERATED {nl, n5, n10, n20, n40},
      }
```

It is assumed that SmallDataDeviceEnable = 10, which represents that the small data equipment is allowed to use the signaling data transmission mechanism, while the non-small data equipment is not allowed to use the signaling data transmission mechanism.

It is assumed that TimerLengthThreshold-1 = s20 and PacketNumThreshold-2 = n5, which represents that the equipment of the small data service is allowed to send at most 5 data packets with 20 seconds.

Fig. 8 is a preferred structural schematic diagram of the above-mentioned embodiment; as shown in Fig. 8, the core network equipment provides the signaling load situation thereof for the access network equipment; and in the existing protocol (taking an LTE as an example), the MME transfers the information via an OVERLOAD START message.

The access network equipment (the access network equipment of an LTE system is an eNB, and the access network equipment of a UMTS system is an RNC) determines, according to its own radio network resource load situation and the signaling load situation transferred by the MME, whether to set limit of using the signaling data transmission mechanism to UE, and the control parameter of the specific signaling data transmission mechanism.

Furthermore, the core network equipment may also initiate the usage limit of the signaling data transmission mechanism to the UE.

The core network equipment determines, according to the signaling load situation of itself, whether to set the usage limit of the signaling data transmission mechanism to the UE; for example, the MME may set a signaling load threshold, and when the signaling load exceeds the signaling load threshold, the MME initiates the limit of using the signaling data transmission mechanism to the UE.

The core network equipment send to the access network equipment the limit parameters of the signaling data transmission mechanism, and the access network equipment adjusts the limit strategy of the signaling data transmission mechanism according to the received limit parameters.

The specific limit strategies may comprise but are not limited to one or more of the following manners:
Manner 1, when the number of data packets arrived or the number of data packets received or the total number of data packets arrived or received within a first preset length of time by the UE is smaller than a second preset threshold, the UE is allowed to use the above-mentioned mechanism of transmitting data via the signaling; otherwise, the UE is not allowed to use the mechanism of transmitting data via the signaling.
Manner 2, when the number of times of the UE using the mechanism of transmitting data via the signaling within the third preset length of time is smaller than the fourth preset threshold, the UE is allowed to continue to use the above-mentioned mechanism of transmitting data via the signaling; otherwise, the UE is prohibited from using the above-mentioned mechanism of transmitting data via the signaling.
Manner 3, the time interval between the UE using the mechanism of transmitting data via the signaling twice can not be smaller than a fifth preset length of time.
Manner 4, a proportion of the users are allowed/not allowed to use the signaling data transmission mechanism.
Manner 5, the signaling data transmission mechanism is allowed/not allowed to be used, for example, when the identifier is "not allowed", it identifies that all the UEs in the access network belonging to the core network equipment can not be allowed to use the signaling data transmission mechanism.
Manner 6, the service type indication or the user equipment type indication indicates whether the signaling data transmission mechanism is allowed or not allowed to be used, wherein the indication is used for setting limit to which types service or types user equipment can/can not be allowed to use the mechanism of transmitting data via the signaling.

Various parameters (e.g., the first preset length of time, the second preset threshold, and the like) in the above-mentioned limit strategies are with the same meanings as those of the above-mentioned six kinds of control parameters of the signaling data transmission mechanism which can be adopted by the eNB, and the details are not described here again.

However, it should be noted that the limit strategies of the signaling data transmission mechanism sent by the core network equipment (e.g., the MME) aim at all the UEs that belongs to the target access network equipment, rather than a single UE.

Preferably, the method for the MME sending the control parameters of the limit strategies can be realised by the method of adding an IE in the existing S 1 signaling, for example, the above-mentioned limit parameters can be born by adding an IE in an S1 signaling in the LTE standard, such as the E-RAB SETUP REQUEST, E-RAB MODIFY REQUEST, E-RAB RELEASE COMMAND, INITIAL CONTEXT SETUP REQUEST, UE CONTEXT RELEASE COMMAND, UE CONTEXT MODIFICATION REQUEST, HANDOVER COMMAND, HANDOVER PREPARATION FAILURE, HANDOVER REQUEST, DOWNLINK NAS TRANSPORT, S1 SETUP RESPONSE, and OVERLOAD START, and the IE design establishment may refer to the above-mentioned examples. However, it should be noted that after receiving the control parameter for the signaling data transmission mechanism send by the core network equipment, the access network equipment can directly use the received control parameter to set a control parameter for a data transmission mechanism of the UE which belongs to the access network equipment; and can also adjust the received control parameter for the data transmission mechanism of the UE which belongs to the access network equipment in combination with its own resource load situation.

For example, when the signaling load of the MME is lighter, the limit extent of the limit parameter sent thereby is also smaller; and the radio resource load of the eNB is heavier, thus the eNB may enlarge the extent of the limit for the data transmission mechanism of the UE which belongs to the eNB ; and for another example, when the signaling load of the MME is heavier, the limit extent of the limit parameter sent thereby is also greater; and the radio resource load of the eNB is lighter, thus the eNB may directly use the parameter sent by the MME to set the control parameter for the data transmission mechanism of the UE which belongs to the eNB.

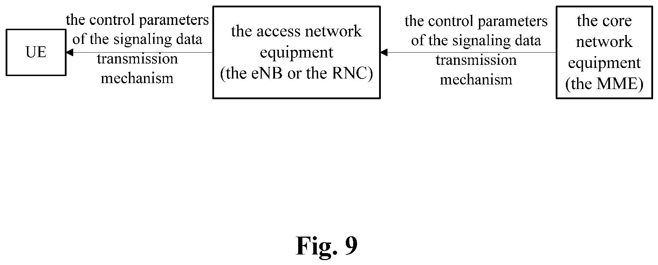

Fig. 9 is the structural schematic diagram of the above-mentioned embodiment of the core network equipment initiating the usage limit of the signaling data transmission mechanism to the UE; as shown in Fig. 9, the core network equipment determines, according to its signaling load situation, whether to set limit of using the signaling data transmission mechanism to the UE, so as to determine the specific control parameter for the signaling data transmission mechanism; and sends the information to the access network equipment.

The determines, with reference to the control parameter of the signaling data transmission mechanism sent by the core network and in combination of its own radio network resource load situation, whether to set limit of using the signaling data transmission mechanism to the UE which belongs to the access network equipment, and the control parameter of the specific signaling data transmission mechanism.

Preferably, the above-mentioned various preferred embodiments are also applicable to the UMTS system, etc.

In another embodiment, a software is further provided, wherein the software is used for executing the technical solutions described in the above-mentioned embodiments and preferred embodiments.

In another embodiment, a storage medium is further provided, wherein the storage medium stores the above-mentioned software, and the storage medium comprises, but is not limited to: an optical disk, a soft disk, a hard disk, an erasable memory, etc.

From the above description, it can be seen that the present invention realises the following technical effects: the network side will send to the user equipment a control parameter which controls the frequency of data transmission via a signaling by the UE, so that the user equipment can control, according to the received control parameter, the frequency of data transmission via the signaling by itself, for example, when in the control parameter, the user equipment is only allowed to transmit data via the signaling at most five times within one minute, the user equipment will transmit data according to the rule, and when the limit is exceeded, the user equipment can prohibit adopting the manner of transmitting data via the signaling so as to effectively solve the technical problem of low system efficiency in the related art due to the mechanism of transmitting data selected by the user himself or herself, thus improving system efficiency.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, improvements, etc. within the principle of the present invention are all included in the scope of the protection of the present invention.

## Claims

1. A method for controlling data transmission via a signaling by a User Equipment, UE, the method comprising:
receiving (S102), by the UE, a control parameter, wherein the control parameter is used for controlling a frequency of the data transmission via the signaling by the UE, wherein the frequency of the data transmission via the signaling refers to transmission times of the data transmission via the signaling within a preset period of time;
controlling (S104), by the UE, the frequency of the data transmission via the signaling by the UE according to the control parameter, wherein the control parameter carries indication information for indicating one or more limit strategies, and/or preset parameters corresponding to one or more limit strategies.

2. The method according to claim 1, wherein the limit strategies comprise at least one of:
when the number of data packets received or the number of data packets sent by the UE within a first preset length of time is smaller than a first preset threshold, the UE is allowed to transmit data via the signaling, otherwise, the UE is prohibited from transmitting data via the signaling;
when the sum of the number of data packets received and sent by the UE within a second preset length of time is smaller than a second preset threshold, the UE is allowed to transmit data via the signaling, otherwise, the UE is prohibited from transmitting data via the signaling;
when the number of times of data transmission via the signaling by the UE within a third preset length of time is smaller than a third preset threshold, the UE is allowed to transmit data via the signaling, otherwise, the UE is prohibited from transmitting data via the signaling;
when a time interval between two consecutive data transmission adopting a signaling data transmission mechanism by the UE is greater than or equal to a fourth preset length of time, the UE is allowed to transmit data via the signaling, otherwise, the UE is prohibited from transmitting data via the signaling; or
a preset proportion of UEs are allowed to adopt a signaling data transmission mechanism.

3. The method according to claim 1, wherein the control parameter further carries: first indication information for indicating whether the UE is allowed to transmit data via the signaling, and/or, second indication information for indicating a service type and/or equipment type of the data transmission via the signaling.

4. The method according to claim 1, wherein
the control parameter is configured by an access network equipment and/or a core network equipment at a network side; or,
the control parameter is carried in a system message and/or a Radio Resource Control, RRC, signaling.

5. A method for controlling data transmission via a signaling by a User Equipment, UE, the method comprising:
determining (S202), by a network side equipment, a control parameter according to a current network state, wherein the control parameter is used for controlling a frequency of data transmission via the signaling by the UE, wherein the frequency of the data transmission via the signaling refers to transmission times of the data transmission via the signaling within a preset period of time;
transmitting (S204), by the network side equipment, the determined control parameter to the UE, wherein the control parameter carries indication information for indicating one or more limit strategies, and/or preset parameters corresponding to one or more limit strategies.

6. The method according to claim 5, wherein the limit strategies comprise at least one of:
when the number of data packets received or the number of data packets sent by the UE within a first preset length of time is smaller than a first preset threshold, the UE is allowed to transmit data via the signaling, otherwise, the UE is prohibited from transmitting data via the signaling;
when the sum of the number of data packets received and sent by the UE within a second preset length of time is smaller than a second preset threshold, the UE is allowed to transmit data via the signaling, otherwise, the UE is prohibited from transmitting data via the signaling;
when the number of times of data transmission via the signaling by the UE within a third preset length of time is smaller than a third preset threshold, the UE is allowed to transmit data via the signaling, otherwise, the UE is prohibited from transmitting data via the signaling;
when a time interval between two consecutive data transmission adopting a signaling data transmission mechanism by the UE is greater than or equal to a fourth preset length of time, the UE is allowed to transmit data via the signaling, otherwise, the UE is prohibited from transmitting data via the signaling; or
a preset proportion of UEs are allowed to adopt a signaling data transmission mechanism.

7. The method according to any one of claims 5-6, wherein the control parameter further carries: first indication information for indicating whether the UE is allowed to transmit data via the signaling, and/or, second indication information for indicating a service type and/or equipment type of the data transmission via the signaling.

8. The method according to any one of claims 5-6, wherein the network side equipment comprises an access network equipment at a network side and/or a core network equipment at a network side.

9. The method according to claim 8, wherein
when the network side equipment is the access network equipment, determining, by the network side equipment, the control parameter according to the current network state comprises: the access network equipment determines the control parameter according to at least one of: a network signaling load, a radio resource load and a frequency of data transmission by the UE; or,
when the network side equipment is the access network equipment, transmitting, by the network side equipment, the determined control parameter to the UE comprises: the access network equipment sends the determined control parameter via a system message to all UEs in a cell managed by the network side equipment; and/or the access network equipment sends the determined control parameter via a Radio Resource Control, RRC, signaling to UEs receiving the RRC signaling.

10. The method according to claim 8, wherein
when the network side equipment is the core network equipment, determining, by the network side equipment, the control parameter according to the current network state comprises: the core network equipment determines the control parameter according to a current signaling load of a core network; or,
when the network side equipment is the core network equipment, transmitting, by the network side equipment, the determined control parameter to the UE comprises: the core network sends the determined control parameter to a target access network equipment, and the control parameter is sent by the target access network equipment to all UEs managed by the target access network equipment; or,
when the network side equipment is the core network equipment, transmitting, by the network side equipment, the determined control parameter to the UE comprises: a core network sends the determined control parameter to a target access network equipment; the target access network equipment determines a new control parameter according to the received control parameter sent by the core network equipment and its own resource load; the target access network equipment sends the new control parameter to all UEs managed by the target access network equipment.

11. A device for controlling data transmission via a signaling by a User Equipment, UE, located in the UE, the device comprising:
a receiving element (302), configured to receive a control parameter, wherein the control parameter is used for controlling a frequency of data transmission via the signaling by the UE, wherein the frequency of the data transmission via the signaling refers to transmission times of the data transmission via the signaling within a preset period of time; and
a controlling element (304), configured to control the frequency of data transmission via the signaling by the UE according to the control parameter, wherein the control parameter carries indication information for indicating one or more limit strategies, and/or preset parameters corresponding to one or more limit strategies.

12. A device for controlling data transmission via a signaling by a User Equipment, UE, located in an access network equipment, the device comprising:
a first determining element (402), configured to determine a control parameter according to a current network state, wherein the control parameter is used for controlling a frequency of data transmission via the signaling by the UE, wherein the frequency of the data transmission via the signaling refers to transmission times of the data transmission via the signaling within a preset period of time;
a first transmitting element (404), configured to transmit the determined control parameter to the UE, wherein the control parameter carries indication information for indicating one or more limit strategies, and/or preset parameters corresponding to one or more limit strategies.

13. The device according to claim 12, wherein
the first determining element (402) comprises: a first determining sub-element, configured to determine the control parameter according to at least one of: a network signaling load, a radio resource load and a frequency of data transmission by the UE; or,
the first transmitting element (404) comprises: a first transmitting sub-element, configured to send the determined control parameter via a system message to all UEs in a cell managed by the network side equipment; and/or a second transmitting sub-element, configured to send the determined control parameter via a Radio Resource Control, RRC, signaling to UEs receiving the RRC signaling.

## Patentansprüche

1. Verfahren zum Steuern der Datenübertragung mittels einer Signalisierung durch ein Benutzergerät, UE, wobei das Verfahren Folgendes umfasst:
Empfangen (S102) eines Steuerparameters durch das UE, wobei der Steuerparameter zum Steuern einer Frequenz der Datenübertragung mittels der Signalisierung durch das UE verwendet wird, wobei sich die Frequenz der Datenübertragung mittels der Signalisierung auf Übertragungszeitpunkte der Datenübertragung mittels der Signalisierung innerhalb eines voreingestellten Zeitraums bezieht;
Steuern (S104) der Frequenz der Datenübertragung mittels der Signalisierung durch das UE gemäß dem Steuerparameter durch das UE, wobei der Steuerparameter Anzeigeinformationen zum Anzeigen einer oder mehrerer Grenzstrategien und/oder voreingestellte Parameter trägt, die einer oder mehreren Grenzstrategien entsprechen.

2. Verfahren nach Anspruch 1, wobei die Grenzstrategien mindestens eines von Folgendem umfassen:
wenn die Anzahl von durch das UE innerhalb einer ersten voreingestellten Zeitdauer empfangenen oder gesendeten Datenpaketen kleiner als ein erster voreingestellter Schwellenwert ist, darf das UE Daten mittels der Signalisierung übertragen, andernfalls darf das UE keine Daten mittels der Signalisierung übertragen;
wenn die Summe der Anzahl von durch das UE innerhalb einer zweiten voreingestellten Zeitdauer empfangenen und gesendeten Datenpaketen kleiner als ein zweiter voreingestellter Schwellenwert ist, darf das UE Daten mittels der Signalisierung übertragen, andernfalls darf das UE keine Daten mittels der Signalisierung übertragen;
wenn die Anzahl der Datenübertragungen mittels der Signalisierung durch das UE innerhalb einer dritten voreingestellten Zeitdauer kleiner als ein dritter voreingestellter Schwellenwert ist, darf das UE Daten mittels der Signalisierung übertragen, andernfalls darf das UE keine Daten mittels der Signalisierung übertragen;
wenn ein zeitlicher Abstand zwischen zwei aufeinanderfolgenden Datenübertragungen, die einen Signalisierungsdatenübertragungsmechanismus durch das UE anwenden, größer oder gleich einer vierten voreingestellten Zeitdauer ist, darf das UE Daten mittels der Signalisierung übertragen, andernfalls darf das UE keine Daten mittels der Signalisierung übertragen; oder
eine voreingestellte Teilmenge an UE darf einen Signalisierungsdatenübertragungsmechanismus anwenden.

3. Verfahren nach Anspruch 1, wobei der Steuerparameter ferner Folgendes trägt: erste Anzeigeinformationen zum Anzeigen, ob das UE mittels der Signalisierung Daten übertragen darf, und/oder zweite Anzeigeinformationen zum Anzeigen eines Diensttyps und/oder Gerätetyps der Datenübertragung mittels der Signalisierung.

4. Verfahren nach Anspruch 1, wobei
der Steuerparameter netzseitig durch ein Zugangsnetzgerät und/oder ein Kernnetzgerät konfiguriert wird; oder
der Steuerparameter in einer Systemnachricht und/oder einer Radio Resource Control-, RRC-Signalisierung getragen wird.

5. Verfahren zum Steuern der Datenübertragung mittels einer Signalisierung durch ein Benutzergerät, UE, wobei das Verfahren Folgendes umfasst:
Ermitteln (S202) eines Steuerparameters gemäß einem aktuellen Netzzustand durch ein netzseitiges Gerät, wobei der Steuerparameter zum Steuern einer Frequenz der Datenübertragung mittels der Signalisierung durch das UE verwendet wird, wobei die Frequenz der Datenübertragung mittels der Signalisierung sich auf Übertragungszeitpunkte der Datenübertragung mittels der Signalisierung innerhalb eines voreingestellten Zeitraums bezieht;
Übertragen (S204) des ermittelten Steuerparameters an das UE durch das netzseitige Gerät, wobei der Steuerparameter Anzeigeinformationen zum Anzeigen einer oder mehrerer Grenzstrategien und/oder voreingestellte Parameter trägt, die einer oder mehreren Grenzstrategien entsprechen.

6. Verfahren nach Anspruch 5, wobei die Grenzstrategien mindestens eines von Folgendem umfassen:
wenn die Anzahl von durch das UE innerhalb einer ersten voreingestellten Zeitdauer empfangenen oder gesendeten Datenpaketen kleiner als ein erster voreingestellter Schwellenwert ist, darf das UE Daten mittels der Signalisierung übertragen, andernfalls darf das UE keine Daten mittels der Signalisierung übertragen;
wenn die Summe der Anzahl von durch das UE innerhalb einer zweiten voreingestellten Zeitdauer empfangenen und gesendeten Datenpaketen kleiner als ein zweiter voreingestellter Schwellenwert ist, darf das UE Daten mittels der Signalisierung übertragen, andernfalls darf das UE keine Daten mittels der Signalisierung übertragen;
wenn die Anzahl der Datenübertragungen mittels der Signalisierung durch das UE innerhalb einer dritten voreingestellten Zeitdauer kleiner als ein dritter voreingestellter Schwellenwert ist, darf das UE Daten mittels der Signalisierung übertragen, andernfalls darf das UE keine Daten mittels der Signalisierung übertragen;
wenn ein zeitlicher Abstand zwischen zwei aufeinanderfolgenden Datenübertragungen, die einen Signalisierungsdatenübertragungsmechanismus durch das UE anwenden, größer oder gleich einer vierten voreingestellten Zeitdauer ist, darf das UE Daten mittels der Signalisierung übertragen, andernfalls darf das UE keine Daten mittels der Signalisierung übertragen; oder
eine voreingestellte Teilmenge an UE darf einen Signalisierungsdatenübertragungsmechanismus anwenden.

7. Verfahren nach einem der Ansprüche 5 bis 6, wobei
der Steuerparameter ferner Folgendes trägt: erste Anzeigeinformationen zum Anzeigen, ob das UE mittels der Signalisierung Daten übertragen darf, und/oder zweite Anzeigeinformationen zum Anzeigen eines Diensttyps und/oder Gerätetyps der Datenübertragung mittels der Signalisierung.

8. Verfahren nach einem der Ansprüche 5 bis 6, wobei das netzseitige Gerät netzseitig ein Zugangsnetzgerät und/oder netzseitig ein Kernnetzgerät umfasst.

9. Verfahren nach Anspruch 8, wobei
wenn das netzseitige Gerät das Zugangsnetzgerät ist, das Ermitteln des Steuerparameters gemäß dem aktuellen Netzzustand durch das netzseitige Gerät Folgendes umfasst: das Zugangsnetzgerät ermittelt den Steuerparameter gemäß mindestens einem von Folgendem: einer Netzsignalisierungslast, einer Funkressourcenlast und einer Frequenz der Datenübertragung durch das UE; oder,
wenn das netzseitige Gerät das Zugangsnetzgerät ist, das Übertragen des ermittelten Steuerparameters an das UE durch das netzseitige Gerät Folgendes umfasst: das Zugangsnetzgerät sendet den ermittelten Steuerparameter mittels einer Systemnachricht an alle durch das netzseitige Gerät verwalteten UE in einer Zelle; und/oder das Zugangsnetzgerät sendet den ermittelten Steuerparameter über eine Radio Resource Control-, RRC-Signalisierung an UE, die die RRC-Signalisierung empfangen.

10. Verfahren nach Anspruch 8, wobei
wenn das netzseitige Gerät das Kernnetzgerät ist, das Ermitteln des Steuerparameters gemäß dem aktuellen Netzzustand durch das netzseitige Gerät Folgendes umfasst: das Kernnetzgerät ermittelt den Steuerparameter gemäß einer aktuellen Signalisierungslast eines Kernnetzes; oder,
wenn das netzseitige Gerät das Kernnetzgerät ist, das Übertragen des ermittelten Steuerparameters an das UE durch das netzseitige Gerät Folgendes umfasst: das Kernnetzgerät sendet den ermittelten Steuerparameter an ein Zielzugangsnetzgerät; und der Steuerparameter wird durch das Zielzugangsnetzgerät an alle durch das Zielzugangsnetzgerät verwalteten UE gesendet; oder,
wenn das netzseitige Gerät das Kernnetzgerät ist, das Übertragen des ermittelten Steuerparameters an das UE durch das netzseitige Gerät Folgendes umfasst: ein Kernnetzgerät sendet den ermittelten Steuerparameter an ein Zielzugangsnetzgerät; das Zielzugangsnetzgerät ermittelt einen neuen Steuerparameter gemäß dem empfangenen Steuerparameter, den das Kernnetzgerät gesendet hat, und seiner eigenen Ressourcenlast; das Zielzugangsnetzgerät sendet den neuen Steuerparameter an alle durch das Zielzugangsnetzgerät verwalteten UE.

11. Vorrichtung zum Steuern der Datenübertragung mittels einer Signalisierung durch ein in dem UE angeordnetes Benutzergerät, UE, wobei die Vorrichtung Folgendes umfasst:
ein Empfangselement (302), das dazu konfiguriert ist, einen Steuerparameter zu empfangen, wobei der Steuerparameter zum Steuern einer Frequenz der Datenübertragung mittels der Signalisierung durch das UE verwendet wird, wobei sich die Frequenz der Datenübertragung mittels der Signalisierung auf Übertragungszeitpunkte der Datenübertragung mittels der Signalisierung innerhalb eines voreingestellten Zeitraums bezieht; und
ein Steuerelement (304), das dazu konfiguriert ist, die Frequenz der Datenübertragung mittels der Signalisierung gemäß dem Steuerparameter durch das UE zu steuern, wobei der Steuerparameter Anzeigeinformationen zum Anzeigen einer oder mehrerer Grenzstrategien und/oder voreingestellte Parameter trägt, die einer oder mehreren Grenzstrategien entsprechen.

12. Vorrichtung zum Steuern der Datenübertragung mittels einer Signalisierung durch ein Benutzergerät, UE, das sich in einem Zugangsnetzgerät befindet, wobei die Vorrichtung Folgendes umfasst:
ein erstes Ermittlungselement (402), das dazu konfiguriert ist, einen Steuerparameter gemäß einem aktuellen Netzzustand zu ermitteln, wobei der Steuerparameter zum Steuern einer Frequenz der Datenübertragung mittels der Signalisierung durch das UE verwendet wird, wobei die Frequenz der Datenübertragung mittels der Signalisierung sich auf Übertragungszeitpunkte der Datenübertragung mittels der Signalisierung innerhalb eines voreingestellten Zeitraums bezieht;
ein erstes Übertragungselement (404), das dazu konfiguriert ist, den ermittelten Steuerparameter an das UE zu übertragen, wobei der Steuerparameter Anzeigeinformationen zum Anzeigen einer oder mehrerer Grenzstrategien und/oder voreingestellte Parameter trägt, die einer oder mehreren Grenzstrategien entsprechen.

13. Vorrichtung nach Anspruch 12, wobei
das erste Ermittlungselement (402) Folgendes umfasst: ein erstes Ermittlungsteilelement, das dazu konfiguriert ist, den Steuerparameters gemäß mindestens einem von Folgendem zu ermitteln: einer Netzsignalisierungslast, einer Funkressourcenlast und einer Frequenz der Datenübertragung durch das UE; oder
das erste Übertragungselement (404) Folgendes umfasst: ein erstes Übertragungsteilelement, das dazu konfiguriert ist, den ermittelten Steuerparameter mittels einer Systemnachricht an alle durch das netzseitige Gerät verwalteten UE in einer Zelle zu senden; und/oder ein zweites Übertragungsteilelement, das dazu konfiguriert ist, den ermittelten Steuerparameter mittels einer Radio Resource Control-, RRC-Signalisierung an UE zu senden, die die RRC-Signalisierung empfangen.

## Revendications

1. Procédé pour commander la transmission de données via une signalisation par un équipement utilisateur, UE, le procédé comprenant :
la réception (S102), par l'UE, d'un paramètre de commande, dans lequel le paramètre de commande est utilisé pour commander une fréquence de la transmission de données via la signalisation par l'UE, dans lequel la fréquence de la transmission de données via la signalisation se rapporte aux temps de transmission de la transmission de données via la signalisation au sein d'une période prédéfinie ;
la commande (S104), par l'UE, de la fréquence de la transmission de données via la signalisation par l'UE en fonction du paramètre de commande, dans lequel le paramètre de commande transporte des informations d'indication pour indiquer une ou plusieurs stratégies de limite et/ou des paramètres prédéfinis correspondant à une ou plusieurs stratégies de limite.

2. Procédé selon la revendication 1, dans lequel les stratégies de limite comprennent au moins l'un des éléments suivants :
lorsque le nombre de paquets de données reçus ou que le nombre de paquets de données envoyés par l'UE au sein d'une première durée prédéfinie est inférieur à un premier seuil prédéfini, l'UE est autorisé à transmettre des données via la signalisation, sinon l'UE a interdiction de transmettre des données via la signalisation ;
lorsque la somme du nombre de paquets de données reçus et envoyés par l'UE au sein d'une deuxième durée prédéfinie est inférieure à un deuxième seuil prédéfini, l'UE est autorisé à transmettre des données via la signalisation, sinon l'UE a interdiction de transmettre des données via la signalisation ;
lorsque le nombre de fois où la transmission de données via la signalisation par l'UE au sein d'une troisième durée prédéfinie est inférieur à un troisième seuil prédéfini, l'UE est autorisé à transmettre des données via la signalisation, sinon l'UE a interdiction de transmettre des données via la signalisation ;
lorsqu'un intervalle de temps entre deux transmissions de données consécutives adoptant un mécanisme de transmission de données de signalisation par l'UE est supérieur ou égal à une quatrième durée prédéfinie, l'UE est autorisé à transmettre des données via la signalisation, sinon l'UE a interdiction de transmettre des données via la signalisation ; ou
une proportion prédéfinie d'UE est autorisée à adopter un mécanisme de transmission de données de signalisation.

3. Procédé selon la revendication 1, dans lequel le paramètre de commande comporte en outre : des premières informations d'indication pour indiquer si l'UE est autorisé à transmettre des données via la signalisation et/ou des secondes informations d'indication pour indiquer un type de service et/ou un type d'équipement de la transmission de données via la signalisation.

4. Procédé selon la revendication 1, dans lequel
le paramètre de commande est configuré par un équipement de réseau d'accès et/ou un équipement de réseau central au niveau d'un côté réseau ; ou
le paramètre de commande est transporté dans un message système et/ou une signalisation de commande de ressources radio, RRC.

5. Procédé pour commander la transmission de données via une signalisation par un équipement utilisateur, UE, le procédé comprenant :
la détermination (S202), par un équipement côté réseau, d'un paramètre de commande en fonction d'un état de réseau actuel, dans lequel le paramètre de commande est utilisé pour commander une fréquence de transmission de données via la signalisation par l'UE, dans lequel la fréquence de la transmission de données via la signalisation se rapporte à des temps de transmission de la transmission de données via la signalisation au sein d'une période prédéfinie ;
la transmission (S204), par l'équipement côté réseau, du paramètre de commande déterminé à l'UE, dans lequel le paramètre de commande transporte des informations d'indication pour indiquer une ou plusieurs stratégies de limite et/ou des paramètres prédéfinis correspondant à une ou plusieurs stratégies de limite.

6. Procédé selon la revendication 5, dans lequel les stratégies de limite comprennent au moins l'un des éléments suivants :
lorsque le nombre de paquets de données reçus ou que le nombre de paquets de données envoyés par l'UE au sein d'une première durée prédéfinie est inférieur à un premier seuil prédéfini, l'UE est autorisé à transmettre des données via la signalisation, sinon l'UE a interdiction de transmettre des données via la signalisation ;
lorsque la somme du nombre de paquets de données reçus et envoyés par l'UE au sein d'une deuxième durée prédéfinie est inférieure à un deuxième seuil prédéfini, l'UE est autorisé à transmettre des données via la signalisation, sinon l'UE a interdiction de transmettre des données via la signalisation ;
lorsque le nombre de fois où la transmission de données via la signalisation par l'UE au sein d'une troisième durée prédéfinie est inférieur à un troisième seuil prédéfini, l'UE est autorisé à transmettre des données via la signalisation, sinon l'UE a interdiction de transmettre des données via la signalisation ;
lorsqu'un intervalle de temps entre deux transmissions de données consécutives adoptant un mécanisme de transmission de données de signalisation par l'UE est supérieur ou égal à une quatrième durée prédéfinie, l'UE est autorisé à transmettre des données via la signalisation, sinon l'UE a interdiction de transmettre des données via la signalisation ; ou
une proportion prédéfinie d'UE est autorisée à adopter un mécanisme de transmission de données de signalisation.

7. Procédé selon l'une quelconque des revendications 5 à 6, dans lequel
le paramètre de commande transporte en outre : des premières informations d'indication pour indiquer si l'UE est autorisé à transmettre des données via la signalisation et/ou des secondes informations d'indication pour indiquer un type de service et/ou un type d'équipement de la transmission de données via la signalisation.

8. Procédé selon l'une quelconque des revendications 5 à 6, dans lequel l'équipement côté réseau comprend un équipement de réseau d'accès au niveau d'un côté réseau et/ou un équipement de réseau central au niveau d'un côté réseau.

9. Procédé selon la revendication 8, dans lequel
lorsque l'équipement côté réseau est l'équipement de réseau d'accès, la détermination, par l'équipement côté réseau, du paramètre de commande en fonction de l'état de réseau actuel comprend : l'équipement de réseau d'accès détermine le paramètre de commande selon au moins un élément parmi : une charge de signalisation de réseau, une charge de ressources radio et une fréquence de transmission de données par l'UE ; ou
lorsque l'équipement côté réseau est l'équipement de réseau d'accès, la transmission, par l'équipement côté réseau, du paramètre de commande déterminé à l'UE comprend : l'équipement de réseau d'accès envoie le paramètre de commande déterminé via un message système à tous les UE dans une cellule gérée par l'équipement côté réseau ; et/ou l'équipement de réseau d'accès envoie le paramètre de commande déterminé via une signalisation de commande de ressources radio, RRC, aux UE recevant la signalisation RRC.

10. Procédé selon la revendication 8, dans lequel
lorsque l'équipement côté réseau est l'équipement de réseau central, la détermination, par l'équipement côté réseau, du paramètre de commande en fonction de l'état de réseau actuel comprend : l'équipement de réseau central détermine le paramètre de commande en fonction d'une charge de signalisation actuelle d'un réseau central ; ou
lorsque l'équipement côté réseau est l'équipement de réseau central, la transmission, par l'équipement côté réseau, du paramètre de commande déterminé à l'UE comprend : le réseau central envoie le paramètre de commande déterminé à un équipement de réseau d'accès cible et le paramètre de commande est envoyé par l'équipement de réseau d'accès cible à tous les UE gérés par l'équipement de réseau d'accès cible ; ou
lorsque l'équipement côté réseau est l'équipement de réseau central, la transmission, par l'équipement côté réseau, du paramètre de commande déterminé à l'UE comprend : un réseau central envoie le paramètre de commande déterminé à un équipement de réseau d'accès cible ; l'équipement de réseau d'accès cible détermine un nouveau paramètre de commande en fonction du paramètre de commande reçu, envoyé par l'équipement de réseau central et de sa propre charge de ressources ; l'équipement de réseau d'accès cible envoie le nouveau paramètre de commande à tous les UE gérés par l'équipement de réseau d'accès cible.

11. Dispositif pour commander la transmission de données via une signalisation par un équipement utilisateur, UE, situé dans l'UE, le dispositif comprenant :
un élément de réception (302), configuré pour recevoir un paramètre de commande, dans lequel le paramètre de commande est utilisé pour commander une fréquence de transmission de données via la signalisation par l'UE, dans lequel la fréquence de la transmission de données via la signalisation se rapporte aux temps de transmission de la transmission de données via la signalisation au sein d'une période prédéfinie ; et
un élément de commande (304), configuré pour commander la fréquence de transmission de données via la signalisation par l'UE en fonction du paramètre de commande, dans lequel le paramètre de commande transporte des informations d'indication pour indiquer une ou plusieurs stratégies de limite et/ou des paramètres prédéfinis correspondant à une ou plusieurs stratégies de limite.

12. Dispositif pour commander la transmission de données via une signalisation par un équipement utilisateur, UE, situé dans un équipement de réseau d'accès, le dispositif comprenant :
un premier élément de détermination (402), configuré pour déterminer un paramètre de commande en fonction d'un état de réseau actuel, dans lequel le paramètre de commande est utilisé pour commander une fréquence de transmission de données via la signalisation par l'UE, dans lequel la fréquence de la transmission de données via la signalisation se rapporte aux temps de transmission de la transmission de données via la signalisation au sein d'une période prédéfinie ;
un premier élément de transmission (404), configuré pour transmettre le paramètre de commande déterminé à l'UE, dans lequel le paramètre de commande transporte des informations d'indication pour indiquer une ou plusieurs stratégies de limite et/ou des paramètres prédéfinis correspondant à une ou plusieurs stratégies de limite.

13. Dispositif selon la revendication 12, dans lequel
le premier élément de détermination (402) comprend : un premier sous-élément de détermination, configuré pour déterminer le paramètre de commande en fonction d'au moins un élément parmi : une charge de signalisation de réseau, une charge de ressources radio et une fréquence de transmission de données par l'UE ; ou
le premier élément de transmission (404) comprend : un premier sous-élément de transmission, configuré pour envoyer le paramètre de commande déterminé via un message système à tous les UE dans une cellule gérée par l'équipement côté réseau ; et/ou un second sous-élément de transmission, configuré pour envoyer le paramètre de commande déterminé via une signalisation de commande de ressources radio, RRC, aux UE recevant la signalisation RRC.
